# EUROPÄISCHE PATENTANMELDUNG

(11) **EP 2 060 448 A1**
(43) Veröffentlichungstag der Anmeldung: **20.05.2009**
(21) Anmeldenummer: 08019471.5
(22) Anmeldetag: 07.11.2008
(51) Int. Cl.: B60R 21/13

(54) **Überrollschutzsystem für Kraftfahrzeuge**

(30) Priorität: 14.11.2007 DE 102007054254
(71) Anmelder: ISE Automotive GmbH, 51702 Bergneustadt (DE)
(72) Erfinder: Liesaus, Frank, Dipl.-Ing., 51702 Bergneustadt (DE); Wacker, Dietmar, Dipl.-Ing., 57489 Drolshagen (DE); Beki, Gürkan, 51766 Engelskirchen (DE)

(57) **Zusammenfassung**

Die Erfindung geht aus von einem Überrollschutzsystem für Kraftfahrzeuge, mit einem jedem Fahrzeugsitz zugeordneten Überrollschutzsystem (1), mit einem fahrzeugfesten Trägerkörper (3) und einem Überrollkörper (2) der mittels einer Haltevorrichtung in der abgelegten Ruheposition lagefixierbar und mittels eines Antriebes in eine verriegelte Stützposition bringbar ist. Um ein Überrollschutzsystem der eingangs genannten Art bereitzustellen, das ein Zurückdrücken des aufgestellten Überrollkörpers in einem Überschlagsfall zuverlässig verhindert ist vorgesehen, dass das Überrollschutzsystem (1) zumindest zwei Verriegelungseinheiten (4) aufweist, wobei jede der zumindest zwei Verriegelungseinheiten (4) quer zur Fahrzeugrichtung außenseitig in Bezug auf den Überrollkörper (2) angeordnet ist, jede Verriegelungseinheit (4) aus zumindest einem fahrzeugfesten Element (4a) und zumindest einem überrollkörperseitigen Element (4b) gebildet ist und dass in einer Ausnehmung (6) des Überrollkörpers (2) zumindest eine mit den Verriegelungseinheiten (4) im Belastungsfall, also in verriegelter Stützposition, in Wirkverbindung stehende separate Abstützung (5) sitzt, wobei die Abstützung (5) fahrzeugfest angeordnet ist und die zumindest eine separate Abstützung (5) nachträglich montierbar und einstellbar ist.

## Beschreibung

Die Erfindung bezieht sich auf ein Überrollschutzsystem für Kraftfahrzeuge gemäß dem Oberbegriff des Anspruchs 1.

Derartige Überrollschutzsysteme dienen zum Schutz der Insassen in Kraftfahrzeugen ohne schützendes Dach, typischerweise in Cabriolets oder Roadstern bei einem Überschlag, da das Fahrzeug über den aufgestellten Überrollkörper abrollen wird, der den Insassen einen Überlebensraum bietet.

Es ist dabei bekannt, einen die gesamte Fahrzeugbreite überspannenden, als Teil der Karosserie ausgebildeten Überrollbügel vorzusehen.

Es ist auch bekannt, jedem Fahrzeugsitz einen höhenunveränderlich fest im Fahrgastraum installierten, d.h. starren, U-förmigen Überrollbügel zuzuordnen. Diese Lösung wird typischerweise bei Roadstern zur Unterstreichung des sportlichen Aussehens eingesetzt.

Weit verbreitet bei Cabriolets sind konstruktive Lösungen, bei denen der Überrollkörper im Normalzustand eingefahren ist, und im Gefahrenfall, also bei einem drohenden Überschlag, sehr schnell in eine schützende Position aufgestellt wird, um zu verhindern, dass die Fahrzeuginsassen durch das sich überschlagende Fahrzeug erdrückt werden.

Diese sogenannten "aktiven" Überrollschutzsysteme überspannen annähernd die gesamte Fahrzeugbreite oder es ist jedem Fahrzeugsitz ein Überrollschutzsystem zugeordnet.
Bei den aktiven Überrollschutzsystemen, die je einem Fahrzeugsitz zugeordnet sind, ist es bekannt Verriegelungseinheiten vorzusehen, die zwischen den Bügelschenkeln sitzen, wie insbesondere in der DE 199 52 125 C1 offenbart. Nachteilig bei diesem System, wie auch bei Systemen die lediglich eine zentrale Verriegelungseinheit besitzen, wie sie z.B. durch die DE 100 40 642 C1 bekannt geworden ist, ist zum einen der zentrale Kraftfluss über das Innere des Überrollschutzsystems und zum anderen, dass diese Systeme dazu neigen, an den Schnittstellen Sperrklinke zu Zahnstange bzw. Sperrklinke zu Rastdorn, im Fall der Belastung durch einen Überschlag, sich quasi wippend abzustützen. Bei den auftretenden Querkräften neigt sich der ausgefahrene Überrollbügel dadurch sehr weit zur Seite, ein Absacken bzw. seitliches Wegkippen des ausgefahrenen Überrollbügels kann nicht verhindert werden, mit der Folge, dass der Aufbau des erforderlichen Kraftniveaus sehr spät einsetzt und somit wertvoller Überlebensraum verloren geht.

Aufgabe der Erfindung ist es, ein zuverlässiges und ein im Überschlagsfall gegen das Zurückdrücken des aufgestellten Überrollkörpers sehr sicheres Überrollschutzsystem bereitzustellen.

Die Erfindung löst die Aufgabe mit den Merkmalen des Anspruchs 1. Vorteilhafte Weiterbildungen der Erfindung sind in den abhängigen Ansprüchen angegeben.

Das erfindungsgemäße Überrollschutzsystem gewährleistet durch die weit auseinander liegenden Verriegelungseinheiten, dass die Kraftübertragung nach außen an die stabile äußere Fahrzeugstruktur sichergestellt ist und ferner eine Kraftübertragung in Richtung Fahrzeugmitte erfolgt, wobei der Überrollkörper seine stabile Lage behält ohne seitlich wegzukippen. Durch die Ausgestaltung des erfindungsgemäßen Überrollschutzsystems kommt es nicht wie beim Stand der Technik zu einer nahezu punktuellen Kraftaufnahme vielmehr erfolgt die Verteilung der Kraft. Somit werden die Lastanforderungen der Fahrzeughersteller erfüllt, die sehr hohe Abstützkräfte fordern, wobei nur ein geringer Weg zurückgelegt werden darf. Ferner trägt das erfindungsgemäße Überrollschutzsystem den immer schwerer werdenden Fahrzeugen Rechnung. Die nachträgliche Montierbarkeit gewährleistet, dass zunächst das nahezu gesamte Überrollschutzsystem zusammengebaut werden kann und erst dann die Abstützung an die Einbausituation angepasst wird.
Die Einstellbarkeit der Abstützung ermöglicht, dass die Position der Abstützung an die jeweilig auftretenden Toleranzen beim Zusammenbau des Überrollschutzsystems angepasst werden kann und somit das Spiel zwischen der Abstützung und der Längserstreckung der Ausnehmung und ggf. das Spiel zu der unteren Traverse sehr klein ist, was in ergänzender Weise zur Funktionssicherheit des Überrollschutzsystems beiträgt. Zusätzlich kann die Abstützung Führungseigenschaften übernehmen.

Im Rahmen der Erfindung handelt es sich bei dem Überrollkörper immer um den ausfahrbaren Teil des Überrollschutzsystems.

Die Ausgestaltung der Verriegelung ist grundsätzlich frei wählbar. Nach einer besonders vorteilhaften Ausgestaltung der Erfindung weist das zumindest eine fahrzeugfeste Element und das zumindest eine überrollkörperseitige Element der Verriegelungseinheit eine Zahnkontur auf, die im aufgestellten Zustand des Überrollschutzsystems ineinander greift. Dadurch ist eine besonders zuverlässige Verriegelung möglich, die sich daraus ergibt, dass sich die Zähne in Stützposition und unter Einwirkung einer äußeren Kraft auf den Überrollkörper regelrecht ineinander verkrallen. Je nach Ausgestaltung der unterschiedlichen Winkel an den Zähnen der Elemente ist somit sichergestellt, dass die gesamte Verriegelungseinheit dazu neigt, sich unter Belastung weiter zu schließen und sich nicht etwa öffnet.

Bei dem fahrzeugfesten Element oder dem überrollkörperseitigen Element muss es sich nicht zwangsläufig um separate Bauteile handeln. Nach einer Weiterbildung der Erfindung ist das zumindest eine fahrzeugfeste Element oder das zumindest eine überrollkörperseitige Element einteilig aus dem fahrzeugfesten Trägerkörper oder dem Überrollkörper gebildet. Eine derartige Ausgestaltung der Erfindung ermöglicht es, dass beispielsweise die Zahnkontur direkter Bestandteil entweder des fahrzeugfesten Trägerkörpers oder des Überrollkörpers ist, beispielsweise durch Einbringen der Zahnkontur in eines der beiden Elemente durch eine Fräsoperation. Das hat den besonderen Vorteil, dass evtl. Schweiß-, Füge- oder Verschrauboperationen wegfallen und somit auch die daraus resultierenden Nachteile wie Schweißverzug, Nachglühen und Handlingsaufwand. Die Herstellkosten des Überrollschutzsystems werden durch diese Ausgestaltung in ergänzender Weise reduziert.

Nach einer besonders vorteilhaften Ausgestaltung der Erfindung handelt es sich bei dem zumindest einen fahrzeugfesten Element oder bei dem zumindest einen überrollkörperseitigen Element um eine Klinke, die einen Fortsatz aufweist. Das ist besonders vorteilhaft, weil es somit z.B. bei Wartungsarbeiten oder auch bei Fehlauslösungen möglich ist, durch ein Betätigen der Klinke und das damit verbundene Lösen der Verriegelungseinheit, den Überrollkörper wieder in seine Ruheposition zu bringen, wobei der Fortsatz der Klinke zum Betätigen dieser leicht zu erreichen ist, die eigentliche Verriegelungseinheit jedoch verdeckt liegen kann.

Der Sicherheitsaspekt des Überrollschutzsystems kann nach einer weiteren Ausgestaltung der Erfindung dadurch positiv beeinflusst werden, dass die Verriegelungseinheiten und die zumindest eine separate Abstützung im aufgestellten Zustand des Überrollkörpers in Bezug auf das Überrollschutzsystem auf einer horizontalen Wirklinie liegt. Hierdurch wird in ergänzender Weise dem Überrollkörper die Möglichkeit genommen wegzukippen, somit kann kein zusätzlicher Hebel wirken, der eine wippende Abstützung begünstigen würde. Das erforderliche Kraftniveau kann damit in ergänzender Weise früh aufgebaut werden.

Nach einer vorteilhaften Ausgestaltung der Erfindung ist die zumindest eine separate Abstützung im aufgestellten Zustand des Überrollkörpers so positioniert, dass sie im Belastungsfall in Wirkverbindung sowohl mit einer Längserstreckung der Ausnehmung als auch mit einer unteren Traverse tritt. Damit wird in ergänzender Weise dazu beigetragen, dass der Effekt der wippenden Abstützung unterbunden wird.

Die Gestaltung des Überrollkörpers ist grundsätzlich frei wählbar. Es kann sich beispielsweise um eine Bügelrohrkonstruktion handeln oder auch um eine Konstruktion aus Profilen. Nach einer Weiterbildung der Erfindung ist der Überrollkörper als umlaufend geschlossenes Profil gebildet. So kann es sich zum Beispiel um ein Aluminium Strangpressprofil handeln, in welches die Ausnehmung durch eine Fräsoperation eingebracht wird, so dass der Überrollkörper einteilig ausgebildet und umlaufend geschlossen ist. Das umlaufend geschlossene Profil kann aber auch durch kraft-, form- oder stoffschlüssige Verbindung von Bauteilen zu einem Überrollkörper erzielt werden.

Die verwendeten Materialien des Überrollschutzsystems können sehr unterschiedlich sein. Dies gilt in besonderer Weise für die Auslegung des fahrzeugfesten Trägerkörpers und des Überrollkörpers aber auch für die anderen Bauteile des Überrollschutzsystems. So können z.B. Stahl, Kunststoff, insbesondere faserverstärkter Kunststoff, Magnesium und Aluminium Verwendung finden. Hierbei ist selbstverständlich auch eine Kombination der unterschiedlichen Materialien denkbar.

Ein Ausführungsbeispiel der Erfindung wird nachstehend mit Bezug auf die Zeichnungen näher erläutert. In den Zeichnungen zeigen:
- Fig.1: ein erfindungsgemäßes Überrollschutzsystem in Ruheposition in einer schematisierten Vorderansicht und
- Fig.2: das System nach Fig. 1, jedoch im aufgestellten Zustand des Überrollkörpers.

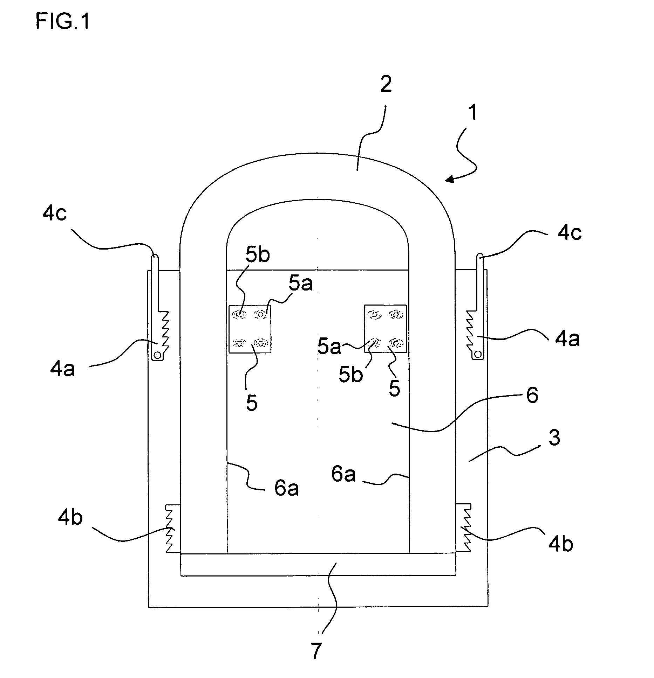

Ein in Fig. 1 dargestelltes schematisiertes Überrollschutzsystem 1 weist einen Überrollkörper 2 in Form eines Überrollbügels auf. Der Überrollkörper 2 befindet sich in Ruheposition in einem fahrzeugfesten Trägerkörper 3. Der fahrzeugfeste Trägerkörper 3 ist kassettenartig ausgebildet und beinhaltet alle für die Funktion des aktiven Überrollschutzsystems 1 notwendigen, hier aber nicht dargestellten, Bauteile, wie die Haltevorrichtung um den Überrollkörper 2 in seiner Ruheposition zu halten, die Führung und die Mittel um den Überrollkörper 2 aufzustellen. Diese Bauteile sind jedoch aus einschlägigen Schutzrechtsschriften, insbesondere der Anmelderin, hinlänglich bekannt.
Das Überrollschutzsystem 1 ist mit zwei Verriegelungseinheiten 4 versehen, wobei jeweils eine Verriegelungseinheit 4 außenseitig am Überrollkörper 2 angebracht ist. Die Verriegelungseinheit 4 wird aus einem überrollseitigen Element 4b in Form einer Zahnleiste gebildet, welches im unteren Bereich des Überrollkörpers 2 befestigt ist und aus einem fahrzeugfesten Element 4a in Form einer Klinke, die ebenfalls eine Verzahnung aufweist. Die Klinke sitzt im oberen Bereich des fahrzeugfesten Trägerkörpers 3, ist drehgelenkig an dem fahrzeugfesten Trägerkörper 3 angelenkt und steht in Richtung auf den Überrollkörper 2 unter Federvorspannung durch eine hier nicht dargestellte Druckfeder.

In einer Ausnehmung 6 des Überrollkörpers 2 sitzen auf Höhe des fahrzeugfesten Elements 4a zwei separate Abstützungen 5, die am fahrzeugfesten Trägerkörper 3 angebracht sind, wobei die Befestigung über Befestigungsmittel 5b, in diesem Fall Schrauben die in Befestigungslöchern 5a sitzen, erfolgt. Die Befestigungslöcher 5a sind als Langlöcher ausgebildet, wobei eine Verschiebung der Abstützungen 5 sowohl in vertikaler als auch horizontaler Richtung möglich ist.

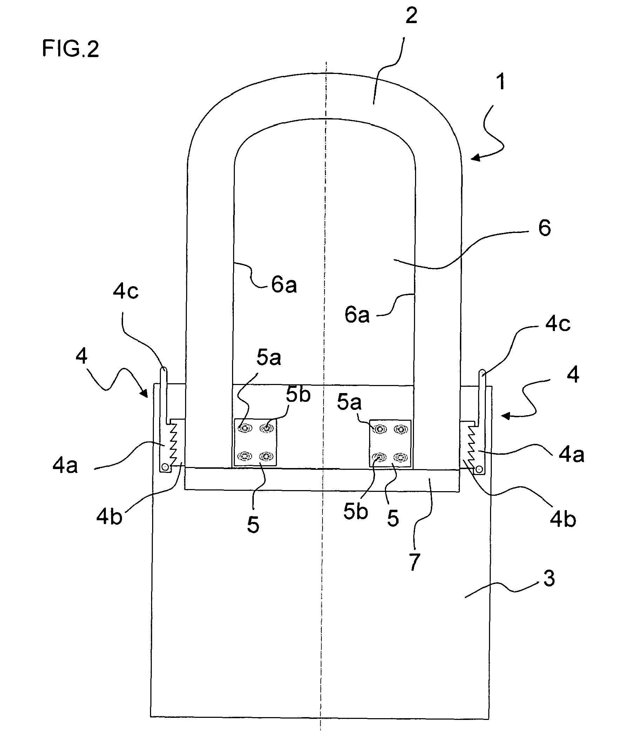

Fig. 2 zeigt das Überrollschutzsystem 1 im aufgestellten Zustand, in seiner verriegelten Stützposition. Die Verriegelungseinheit 4 ist nun wirksam, indem das fahrzeugfeste Element 4a und das überrollkörperseitige Element 4b mit ihren Zähnen ineinandergreifen und ein Zurückdrücken des Überrollkörpers 2 in seine Ruheposition verhindert. Durch die separaten Abstützungen 5, die in der Ausnehmung 6 des Überrollkörpers 2 in unmittelbarer Nähe zu den Längserstreckungen der Ausnehmung 6a und zu einer unteren Traverse 7 liegen, wird ein seitliches Wegkippen bzw. Absacken des Überrollkörpers 2 verhindert. In Bezug auf das Überrollschutzsystem 1 liegen die Abstützungen 5 auf einer horizontalen Wirklinie. Die Verriegelungseinheiten 4 stehen im Belastungsfall in Wirkverbindung mit den Abstützungen 5, dadurch dass sich die Verriegelungseinheiten 4, der Überrollkörper 2, die Abstützungen 5 und die Traverse 7 gegenseitig abstützen.

Wurde das Überrollschutzsystem 1 z.B. aufgrund von Wartungsarbeiten ausgelöst, so ist es möglich, die Verriegelungseinheiten 4 durch Betätigen der Klinke an den Fortsätzen 4c gegen die Kraft der Druckfeder zu lösen und den Überrollkörper 2 in seine Ruheposition zu bringen.

In einer hier nicht dargestellten Ausführungsform kann der Überrollkörper 2 auch in Gänze aus einem Profilkörper gebildet sein, wobei die Ausnehmung 5 dann beispielsweise durch eine Fräsoperation eingebracht wird.

### Bezugszeichenliste

- 1: Überrollschutzsystem
- 2: Überrollkörper
- 3: Fahrzeugfester Trägerkörper
- 4: Verriegelungseinheit
- 4a: Fahrzeugfestes Element
- 4b: Überrollkörperseitiges Element
- 4c: Fortsatz
- 5: Abstützung
- 5a: Befestigungsloch
- 5b: Befestigungsmittel
- 6: Ausnehmung
- 6a: Längserstreckung der Ausnehmung
- 7: Untere Traverse

## Patentansprüche

1. Überrollschutzsystem für Kraftfahrzeuge, mit einem jedem Fahrzeugsitz zugeordneten Überrollschutzsystem (1), mit einem fahrzeugfesten Trägerkörper (3) und einem Überrollkörper (2) der mittels einer Haltevorrichtung in der abgelegten Ruheposition lagefixierbar und mittels eines Antriebes in eine verriegelte Stützposition bringbar ist,
**dadurch gekennzeichnet, dass** das Überrollschutzsystem (1) zumindest zwei Verriegelungseinheiten (4) aufweist, wobei jede der zumindest zwei Verriegelungseinheiten (4) quer zur Fahrzeugrichtung außenseitig in Bezug auf den Überrollkörper (2) angeordnet ist, jede Verriegelungseinheit (4) aus zumindest einem fahrzeugfesten Element (4a) und zumindest einem überrollkörperseitigen Element (4b) gebildet ist und dass in einer Ausnehmung (6) des Überrollkörpers (2) zumindest eine mit den Verriegelungseinheiten (4) im Belastungsfall, also in verriegelter Stützposition, in Wirkverbindung stehende separate Abstützung (5) sitzt, wobei die Abstützung (5) fahrzeugfest angeordnet ist und die zumindest eine separate Abstützung (5) nachträglich montierbar und einstellbar ist.

2. Überrollschutzsystem nach Anspruch 1, **dadurch gekennzeichnet, dass** das zumindest eine fahrzeugfeste Element (4a) und das zumindest eine überrollkörperseitige Element (4b) der Verriegelungseinheit (4) eine Zahnkontur aufweist, die im aufgestellten Zustand des Überrollschutzsystems (1) ineinander greift.

3. Überrollschutzsystem nach Anspruch 1 oder 2, **dadurch gekennzeichnet, dass** das zumindest eine fahrzeugfeste Element (4a) oder das zumindest eine überrollkörperseitige Element (4b) einteilig aus dem fahrzeugfesten Trägerkörper (3) oder dem Überrollkörper (2) gebildet ist.

4. Überrollschutzsystem nach einem oder mehreren der vorhergehenden Ansprüche, **dadurch gekennzeichnet, dass** das zumindest eine fahrzeugfeste Element (4a) oder das zumindest eine überrollkörperseitige Element (4b) eine Klinke ist und das die Klinke einen Fortsatz (4c) aufweist.

5. Überrollschutzsystem nach einem oder mehreren der vorhergehenden Ansprüche, **dadurch gekennzeichnet, dass** die Verriegelungseinheiten (4) und die zumindest eine separate Abstützung (5) im aufgestellten Zustand des Überrollkörpers (2) in Bezug auf das Überrollschutzsystem (1) auf einer horizontalen Wirklinie liegen.

6. Überrollschutzsystem nach einem oder mehreren der vorhergehenden Ansprüche, **dadurch gekennzeichnet, dass** die zumindest eine separate Abstützung (5) im aufgestellten Zustand des Überrollkörpers (2) so positioniert ist, dass sie im Belastungsfall in Wirkverbindung sowohl mit einer Längserstreckung der Ausnehmung (6a) als auch mit einer unteren Traverse (7) tritt.

7. Überrollschutzsystem nach einem oder mehreren der vorhergehenden Ansprüche, **dadurch gekennzeichnet, dass** der Überrollkörper (2) als umlaufend geschlossenes Profil gebildet ist.
